(19) Europäisches Patentamt
European Patent Office
Office européen des brevets

(11) **EP 4 321 036 A1**

(12) **EUROPEAN PATENT APPLICATION**
published in accordance with Art. 153(4) EPC

(43) Date of publication:
**14.02.2024 Bulletin 2024/07**

(21) Application number: **22784671.4**

(22) Date of filing: **05.04.2022**

(51) International Patent Classification (IPC):
*A23L 13/00* (2016.01)      *A23C 11/00* (2006.01)
*A23L 2/00* (2006.01)       *A23L 2/52* (2006.01)
*A23L 2/66* (2006.01)       *A23L 2/38* (2021.01)
*A23L 33/185* (2016.01)

(52) Cooperative Patent Classification (CPC):
**A23C 11/00; A23L 2/00; A23L 2/38; A23L 2/52;
A23L 2/66; A23L 13/00; A23L 33/185**

(86) International application number:
**PCT/JP2022/017088**

(87) International publication number:
**WO 2022/215689 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2021 JP 2021064380**

(71) Applicants:
• **Amano Enzyme Europe Ltd.**
  **OX14 4SH (GB)**

• **Amano Enzyme Inc.**
  **Nagoya-shi**
  **Aichi 460-8630 (JP)**

(72) Inventor: **FUJIOKA, Hiroki**
  **Abingdon, Oxfordshire, OX14 4SH (GB)**

(74) Representative: **Müller-Boré & Partner
Patentanwälte PartG mbB
Friedenheimer Brücke 21
80639 München (DE)**

(54) **METHOD FOR MANUFACTURING PROCESSED HEMP BEVERAGE/FOODSTUFF OR FOODSTUFF MATERIAL**

(57)   An objective of the present invention is to provide a processing technique enabling addition of umami to a hemp beverage/foodstuff or foodstuff material. A processed hemp beverage/foodstuff or foodstuff material obtained by a method for manufacturing a processed hemp beverage/foodstuff or foodstuff material comprising a step of processing a hemp beverage/foodstuff or foodstuff material with a filamentous fungi-derived protease has added umami.

**Description**

TECHNICAL FIELD

The present invention relates to a method for producing a processed hemp food or drink product or food ingredient. Specifically, the present invention relates to a method for producing a processed hemp food or drink product or food ingredient to which umami is imparted.

BACKGROUND ART

Plant-based protein beverages (plant-based milk), which are rich in nutrients and have a long storage period, have been increasingly popular as alternatives to animal milk for various reasons such as the recent health boom, countermeasures against allergic problems, religious reasons, and increase in cases where people avoid outings accompanying the spread of infectious diseases.

Among plant-based milks, hemp milk containing hemp seed nut as a raw material is extremely excellent in nutrition. With regard to the nutritional value of the hemp seed nut, the content of protein per 100 g of the edible portion is 28.8 g, which is higher than the contents of protein of tuna red meat and chicken, the contents of minerals per 100 g of the edible portion are 11 mg of iron, 1.5 mg of copper, 9.6 mg of zinc, and 690 mg of magnesium, and thus the hemp seed nut is more abundant in minerals as a whole than sesame, almond, lever, and oyster (Non-Patent Document 1).

PRIOR ART DOCUMENT

NON-PATENT DOCUMENT

Non-Patent Document 1: Standard Tables of Food Composition in Japan, Fifth Revised Edition, the Ministry of Health, Labour and Welfare, 2000

SUMMARY OF THE INVENTION

PROBLEMS TO BE SOLVED BY THE INVENTION

Hemp milk has an abundant nutritional value including protein, but has a peculiar flavor unique to hemp seed nuts, and thus has an aspect of being avoided by some consumers in terms of taste. In view of the expansion of the market of a plant-based meat (also called plant meat or alternative meat), which is attracting increasing attention together with plant-based protein beverages, there is also a possibility that hemp, which is a high protein, can form a market as a plant-based meat. Thus, it is desirable to consider the point of taste in the same manner. However, the influence of treatment in the production process of beverages, foods, and food ingredients containing hemp protein on taste has not been sufficiently studied.

It is therefore an object of the present invention to provide a processing technique capable of improving the taste of the hemp food or drink product or food ingredient.

MEANS FOR SOLVING THE PROBLEM

The present inventor has unexpectedly found that umami is added by treating a hemp food or drink product or food ingredient with a protease derived from a filamentous fungus. The present invention has been completed by further conducting studies based on these findings.

That is, the present invention provides inventions of the following aspects.

Item 1. A method for producing a processed hemp food or drink product or food ingredient, the method including a step of treating a hemp food or drink product or food ingredient with a protease derived from a filamentous fungus.

Item 2. The method according to item 1, in which the protease derived from a filamentous fungus is a protease derived from genus Aspergillus.

Item 3. The method according to item 1 or 2, in which the protease derived from a filamentous fungus is a protease derived from Aspergillus oryzae.

Item 4. The method according to any one of items 1 to 3, in which the hemp food or drink product or food ingredient is hemp milk.

Item 5. An umami imparting agent for a hemp food or drink product or food ingredient, the umami imparting agent including a protease derived from a filamentous fungus.

ADVANTAGES OF THE INVENTION

According to the present invention, there is provided a processing technique capable of imparting umami to hemp food or drink products or food ingredients.

EMBODIMENTS OF THE INVENTION

1. Method for producing processed hemp food or drink product or food ingredient

The method for producing a processed hemp food or drink product or food ingredient according to the present invention includes a step of treating the hemp food or drink product or food ingredient with a protease derived from a filamentous fungus. Hereinafter, the method for producing the processed hemp food or drink product or food ingredient according to the present invention will be described in detail.

1-1. Hemp food or drink product or food ingredient

The hemp food or drink product or food ingredient used in the present invention is a beverage containing hemp protein (for drinking, hemp beverage), a food containing hemp protein (for eating, hemp food; in the present invention, "food" includes not only food for humans but also feed for animals other than humans), or a food ingredient containing hemp protein (food ingredient that, in combination with other food materials, constitutes a beverage or a food; hemp food ingredient).

The beverage containing the hemp protein is not particularly limited as long as it is a liquid in which the hemp protein is dissolved and/or dispersed in water. Specific examples of the beverage containing hemp protein include (i) a liquid obtained by dispersing dry powder of a food material containing hemp protein in water; (ii) a liquid obtained by crushing and dispersing a food material containing hemp protein in water; (iii) a liquid obtained by, for example, removing at least a part of components other than the hemp protein from the liquid of the above (i) or (ii) to increase the content of the hemp protein; and (iv) a liquid obtained by dissolving and/or dispersing the dry powder prepared from the liquid of any one of (i) to (iii) in water. The food material containing hemp protein is usually hemp seed nuts (obtained by removing seed coats from hemp seeds), but other examples thereof include hemp seeds, and hemp protein particles or a hemp protein powder which are/is squeezed residue of hemp seeds (a portion excluding a hemp oil). As a preferred example of the beverage containing hemp protein, there may be mentioned hemp milk which is an aqueous dispersion of crushed hemp seed nuts.

Examples of the food containing hemp protein include textured hemp protein. The textured hemp protein is a product which is texture-processed with an extruder or the like using hemp seeds, squeezed residue obtained by removing the hemp oil from the hemp seeds, or the like as a raw material and has a texture close to that of meat. The term "hemp" in the present invention refers to a so-called industrial hemp, and specifically refers to a cultivar which does not contain tetrahydrocannabinol (THC) causing perceptual alterations or has a low THC concentration. Since industrial hemp does not contain THC or has a low concentration thereof, it has no efficacy as a perceptual alteration drug or cannot lead to abuse.

Examples of the food ingredient containing hemp protein include dry powder of a food material containing hemp protein, and squeezed residue of hemp seeds (hemp protein particles or hemp protein powder).

The protein content in the hemp food or drink product or food ingredient used in the present invention is not particularly limited, but it is, for example, 0.1% by weight or more, preferably 0.5% by weight or more, and more preferably 1% by weight or more, 2% by weight or more, 3% by weight or more, 4% by weight or more, or 5% by weight or more. The upper limit of the protein content range in the hemp food or drink product or food ingredient is, for example, 11% by weight or less, preferably 10% by weight or less, more preferably 9% by weight or less, still more preferably 8% by weight or less, 7% by weight or less, and even still more preferably 6% by weight or less. The upper limit of the protein content range is preferably applied particularly when the hemp food or drink product or food ingredient is a beverage containing hemp protein.

1-2. Protease derived from filamentous fungus

The protease derived from a filamentous fungus used in the present invention is not particularly limited as long as it is an enzyme derived from a filamentous fungus that hydrolyzes a peptide bond of a protein. The protease derived from a filamentous fungus imparts umami to hemp food or drink products or food ingredients.

Specific examples of the protease derived from a filamentous fungus include proteases derived from the genus Aspergillus, the genus Mucor, the genus Neurospora, the genus Penicillium, the genus Rhizomucor, the genus Rhizopus, and the genus Sclerotinia. These proteases derived from filamentous fungi may be used singly or in combination of two or more kinds thereof. Among these filamentous fungal proteases, a protease derived from the genus Aspergillus is preferable from the viewpoint of further enhancing the umami imparting effect.

Specific examples of the protease derived from the genus Aspergillus include proteases derived from Aspergillus oryzae, Aspergillus niger, Aspergillus melleus, Aspergillus japonicus, Aspergillus awamori, Aspergillus kawachii, Aspergillus sojae, Aspergillus tamarii, Aspergillus foetidus, Aspergillus fumigatus, Aspergillus nidulans, Aspergillus aculeatus, Aspergillus candidus, Aspergillus flavus, Aspergillus saitoi, Aspergillus inuii, Aspergillus glaucus, Aspergillus caesiellus, Aspergillus clavatus, Aspergillus deflectus, Aspergillus fischerianus, Aspergillus parasiticus, Aspergillus penicilloides, Aspergillus restrictus, Aspergillus sydowii, Aspergillus terreus, Aspergillus ustus, and Aspergillus versicolor.

These proteases derived from the genus Aspergillus may be used singly or in combination of two or more kinds thereof. Among these proteases derived from the genus Aspergillus, a protease derived from Aspergillus oryzae is preferable from the viewpoint of further enhancing the umami imparting effect.

The protease derived from a filamentous fungus can be prepared by a known method. As an example, when a protease derived from the genus Aspergillus is prepared, the protease can be easily prepared by a method in which koji production of a fungus of the genus Aspergillus is prepared, and the protease is separated using known means, a method using a genetic recombination technique, or the like. As the protease derived from a filamentous fungus, a commercially available product may be used. Examples of the commercially available proteases derived from filamentous fungi include ProteAX (protease derived from Aspergillus oryzae), PR-AN100 (neutral protease derived from Aspergillus oryzae), Protease HF "Amano" 150SD (acidic protease derived from Aspergillus oryzae), Protease M "Amano" (acidic protease derived from Aspergillus oryzae), Acid Protease UF "Amano" SD (acidic protease derived from Aspergillus niger), Protease A "Amano" (neutral protease derived from Aspergillus oryzae), and Protease A "Amano" 2SD (neutral protease derived from Aspergillus oryzae) manufactured by Amano Enzyme Inc.; and Sumizyme MP (alkaline protease derived from Aspergillus melleus) and Sumizyme FL-G (alkaline protease derived from Aspergillus oryzae) manufactured by SHINNIHON CHEMICALS Corporation.

The amount of the protease derived from a filamentous fungus used is not particularly limited, but the amount of the protease derived from a filamentous fungus used per g of the hemp protein is, for example, 0.1 U or more. From the viewpoint that the umami imparting effect is further enhanced, the amount of the protease derived from a filamentous fungus used per g of the hemp protein is preferably 1 U or more, and more preferably 5 U or more, 10 U or more, 100 U or more, 200 U or more, 300 U or more, or 400 U or more. The upper limit of the range of the amount of the protease derived from a filamentous fungus used per g of the hemp protein is not particularly limited, but it is preferably 2000 U or less, more preferably 1800 U or less, still more preferably 1600 U or less, and even still more preferably 1500 U or less, 1300 U or less, 1100 U or less, 900 U or less, 700 U or less, 500 U or less, 300 U or less, 200 U or less, 100 U or less, 50 U or less, or 10 U or less.

The amount of the protease derived from a filamentous fungus used per g of hemp seeds is, for example, 0.1 U or more. From the viewpoint that the umami imparting effect is further enhanced, the amount of the protease derived from a filamentous fungus used per g of hemp seeds is preferably 1 U or more, more preferably 3 U or more, and still more preferably 5 U or more, 10 U or more, 100 U or more, 200 U or more, or 300 U or more. The upper limit of the range of the amount of the protease derived from a filamentous fungus used per g of hemp seeds is not particularly limited, but it is preferably 1500 U or less, more preferably 1200 U or less, and still more preferably 1000 U or less, 800 U or less, 600 U or less, 400 U or less, 300 U or less, 200 U or less, 100 U or less, 50 U or less, or 10 U or less.

The protease activity is measured by the Folin method using casein as a substrate. That is, for the protease activity, an enzymatic reaction is carried out by a conventional method using casein as a substrate, and the amount of enzyme increasing the Folin test solution coloring substance per minute to the amount corresponding to 1 $\mu$g of tyrosine is defined as 1 unit (1 U).

1-3. Conditions such as reaction conditions

In the step of treating a hemp food or drink product or food ingredient with a protease derived from a filamentous fungus, a protease derived from a filamentous fungus is added to a hemp food or drink product or food ingredient to prepare a hemp food or drink product or food ingredient composition containing the hemp food or drink product or food ingredient and the protease derived from a filamentous fungus, and the hemp food or drink product or food ingredient composition is maintained in a heated state to promote a reaction for producing umami.

The temperature of treatment with the protease derived from a filamentous fungus is not particularly limited, and can be appropriately determined by those skilled in the art according to the optimum temperature of the enzyme used and/or the thermal properties of the hemp food or drink product or food ingredient, and the like, but it is, for example, 40 to 70°C, preferably 48 to 62°C.

The time of treatment reaction with the protease derived from a filamentous fungus is not particularly limited, and may be appropriately determined according to the preparation scale of the composition, the timing of addition of the enzyme, and the like, but it is, for example, 30 minutes or longer, preferably 50 minutes or longer. The upper limit of the range of the time of treatment reaction is not particularly limited, but it is, for example, 12 hours or less, 8 hours or less, or 4 hours or less.

The hemp food or drink product or food ingredient composition after completion of the enzyme treatment is subjected to an enzyme deactivation treatment, then cooled, and subjected to post-treatment such as filtration as necessary, thereby obtaining a processed hemp food or drink product or food ingredient. The processed hemp food or drink product or food ingredient obtained by the production method of the present invention can be provided as a food or drink product with high palatability because umami is imparted to the processed hemp food or drink product or food ingredient. In the present invention, a preferred processed hemp food or drink product or food ingredient is a beverage (processed hemp beverage), and particularly preferred is processed hemp milk.

Furthermore, the obtained processed hemp food or drink product or food ingredient may be prepared as a dried product of the processed hemp food or drink product or food ingredient through a drying step. Further, in a case where the processed hemp food or drink product or food ingredient is a beverage, the processed hemp food or drink product or food ingredient can be prepared as a solid processed hemp composition from which a hemp beverage having umami is obtained when the composition is dissolved and/or dispersed in water. The drying method is not particularly limited, and examples thereof include freeze drying, vacuum drying, and spray drying. Examples of the shape of the solid processed hemp composition include powder, fine particles, and granules.

2. Umami imparting agent for hemp food or drink product or food ingredient

As described above, protease derived from a filamentous fungus can impart umami to hemp food or drink products or food ingredients. Thus, the present invention also provides an umami imparting agent for hemp food or drink products or food ingredients, the umami imparting agent including a protease derived from a filamentous fungus.

In the umami imparting agent described above, the kind, amount, and the like of components to be used are as described in the section "1. Method for producing processed hemp food or drink product or food ingredient".

EXAMPLES

Hereinafter, the present invention will be specifically described with reference to the examples, but the present invention is not to be construed as being limited to the following examples.

[Enzyme used]

- PR-AX (ProteAX): Protease derived from Aspergillus oryzae
- PR-AN100: Protease derived from Aspergillus oryzae
- TH-PC10F (Thermoase PC10F): Protease derived from Geobacillus stearothermophilus
- PR-NY (Protin SD-NY10): Protease derived from Bacillus amyloliquefaciens
- PR-AY (Protin SD-AY10): Protease derived from Bacillus licheniformis

[Method for measuring protease activity]

A 0.6% (w/v) casein solution (0.05 mol/L sodium hydrogen phosphate, pH 8.0 [in the case of PR-AX, TH-PC10F, PR-NY, or PR-AY] or pH 6.0 [in the case of PR-AN100]), 5 mL, was warmed at 37°C for 10 minutes, 1 mL of a sample solution containing protease was then added, and the mixture was immediately shaken. This solution was allowed to stand at 37°C for 10 minutes, 5 mL of a trichloroacetic acid test solution (1.8% (w/v) trichloroacetic acid, 1.8% (w/v) sodium acetate, and 0.33 mol/L acetic acid [in the case of PR-AX, TH-PC10F, PR-NY, or PR-AY], or 0.44 mol/L trichloroacetic acid [in the case of PR-AN100]) was then added, the mixture was shaken, and again allowed to stand at 37°C for 30 minutes, and the mixture was filtered. The first filtrate (3 mL) was removed, and the next filtrate (2 mL) was weighed out. Then, 5 mL of a 0.55 mol/L sodium carbonate test solution and 1 mL of a Folin test solution (1 → 3) were added, and the mixture was shaken well and allowed to stand at 37°C for 30 minutes. For this liquid (enzymatic reaction solution), the absorbance AT at a wavelength of 660 nm was measured using water as a control.

A liquid (blank) was separately obtained by operating in the same manner as the above-described enzymatic reaction solution except that 1 mL of a sample solution containing protease was weighed out, 5 mL of a trichloroacetic acid test solution (1.8% (w/v) trichloroacetic acid, 1.8% (w/v) sodium acetate, and 0.33 mol/L acetic acid [in the case of PR-AX, TH-PC10F, PR-NY, or PR-AY], or 0.44 mol/L trichloroacetic acid [in the case of PR-AN100]) was added and shaken, then 5 mL of a 0.6% (w/v) casein solution (0.05 mol/L sodium hydrogen phosphate, pH 8.0 [in the case of PR-AX, TH-PC10F, PR-NY, or PR-AY] or pH 6.0 [in the case of PR-AN100]) was added, and the mixture was immediately shaken and allowed to stand at 37°C for 30 minutes. The absorbance AB was measured for the liquid (blank).

The amount of enzyme increasing the Folin test solution coloring substance per minute to the amount corresponding to 1 µg of tyrosine was defined as 1 unit (1 U).

One mL, 2 mL, 3 mL, and 4 mL of a 1 mg/mL tyrosine standard stock solution (0.2 mol/L hydrochloric acid) were each weighed out, and a 0.2 mol/L hydrochloric acid test solution was added thereto to a volume of 100 mL. To 2 mL of each solution weighed out, 5 mL of a 0.55 mol/L sodium carbonate test solution and 1 mL of a Folin test solution (1 → 3) were added, the mixture was immediately shaken, and the mixture was allowed to stand at 37°C for 30 minutes. For these liquids, the absorbances A1, A2, A3, and A4 at a wavelength of 660 nm were measured using a liquid obtained by weighing 2 mL of a 0.2 mol/L hydrochloric acid test solution and operating in the same manner as described above, as a control. A calibration curve was prepared by plotting the absorbances A1, A2, A3, and A4 on the vertical axis and the amount of tyrosine (µg) in 2 mL of each solution on the horizontal axis, and the amount of tyrosine (µg) corresponding to the absorbance difference 1 was determined.

[Mathematical Formula 1]

$$\text{Protease activity (U/g, U/mL)} = (AT - AB) \times F \times 11/2 \times 1/10 \times 1/M$$

AT: absorbance of enzymatic reaction solution
AB: absorbance of blank
F: amount of tyrosine (µg) corresponding to absorbance difference 1 determined from calibration curve of tyrosine
11/2: factor for conversion to total amount of liquid after stopping reaction
1/10: factor for conversion to per minute of reaction time
M: sample amount (g or mL) in 1 mL of sample solution

[Test example]

(1) Production of processed hemp milk

The enzyme shown in Table 1 was added to hemp milk (plant-based milk using hemp seed as a raw material) so as to give the indicated amount, and the mixture was treated at 50°C for 1.5 hours. The treated hemp milk composition was inactivated at 90 to 95°C for 15 minutes and cooled by heat dissipation on ice to obtain processed hemp milk.

(2) Evaluation of umami imparting effect

The taste of the obtained processed hemp milk was evaluated by the presence or absence of umami. A case where it was recognized that umami was imparted was evaluated as "○", and a case where it was not recognized that umami was imparted was evaluated as "×". The hemp milk used in this test example does not originally have umami.

[Table 1]

| | | | Example 1 | Example 2 | Comparative Example 1 | Comparative Example 2 | Comparative Example 3 |
|---|---|---|---|---|---|---|---|
| Hemp protein | | (*1) | 5% | 5% | 5% | 5% | 5% |
| Protease derived from filamentous fungus | PR-AN | (*1) | 0.025% | - | - | - | - |
| | | (*2) | 500 U | - | - | - | - |
| | | (*3) | 375 U | - | - | - | - |
| | PR-AX | (*1) | - | 0.025% | - | - | - |
| | | (*2) | - | 1200 U | - | - | - |
| | | (*3) | - | 900 U | - | - | - |
| Bacterial protease | TH-PC10F | (*1) | - | - | 0.025% | - | - |
| | | (*2) | - | - | 450 U | - | - |
| | | (*3) | - | - | 338 U | - | - |
| | PR-NY | (*1) | - | - | - | 0.025% | - |
| | | (*2) | - | - | - | 350 U | - |
| | | (*3) | - | - | - | 263 U | - |
| | PR-AY | (*1) | - | - | - | - | 0.025% |
| | | (*2) | - | - | - | - | 400 U |
| | | (*3) | - | - | - | - | 300 U |
| Umami imparting effect | | | ○ | ○ | × | × | × |

(*1) Weight concentration    (*2) Activity value per g of hemp protein    (*3) Activity value per g of hemp seed nuts

As is apparent from Table 1, it was confirmed that umami was imparted to the hemp milk by treating the hemp milk with a protease derived from a filamentous fungus (Examples 1 and 2). On the other hand, even when the hemp milk was treated with a bacterial protease, it was not confirmed that umami was imparted to the hemp milk (Comparative Examples 1 to 3). Therefore, it was found that the umami imparting effect observed in Examples 1 and 2 was a specific effect obtained by using a protease derived from a filamentous fungus.

**Claims**

1. A method for producing a processed hemp food or drink product or food ingredient, the method comprising a step of treating a hemp food or drink product or food ingredient with a protease derived from a filamentous fungus.

2. The method according to claim 1, wherein the protease derived from a filamentous fungus is a protease derived from genus Aspergillus.

3. The method according to claim 1, wherein the protease derived from a filamentous fungus is a protease derived from Aspergillus oryzae.

4. The method according to claim 1, wherein the hemp food or drink product or food ingredient is hemp milk.

5. An umami imparting agent for a hemp food or drink product or food ingredient, the umami imparting agent comprising a protease derived from a filamentous fungus.

## INTERNATIONAL SEARCH REPORT

| | International application No. |
|---|---|
| | **PCT/JP2022/017088** |

### A. CLASSIFICATION OF SUBJECT MATTER

***A23L 13/00***(2016.01)i; ***A23C 11/00***(2006.01)i; ***A23L 2/00***(2006.01)i; ***A23L 2/52***(2006.01)i; ***A23L 2/66***(2006.01)i; ***A23L 2/38***(2021.01)i; ***A23L 33/185***(2016.01)i
FI:   A23L2/00 J; A23C11/00; A23L2/00 B; A23L13/00 A; A23L2/00 F; A23L2/38 C; A23L2/66; A23L33/185

According to International Patent Classification (IPC) or to both national classification and IPC

### B. FIELDS SEARCHED

Minimum documentation searched (classification system followed by classification symbols)

A23L13/00; A23C11/00; A23L2/00; A23L2/52; A23L2/66; A23L2/38; A23L33/185

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/MEDLINE/EMBASE/BIOSIS/FSTA (STN)

### C. DOCUMENTS CONSIDERED TO BE RELEVANT

| Category* | Citation of document, with indication, where appropriate, of the relevant passages | Relevant to claim No. |
|---|---|---|
| X | TANG, Chuanhe et al. Enzymatic hydrolysis of hemp (Cannabis sativa L.) protein isolate by various proteases and antioxidant properties of the resulting hydrolysates. Food Chemistry. 2009, vol. 114, pp. 1484-1490 <br> abstract, etc. | 1-5 |
| P, X | CN 112813126 A (TIANJIN UNIVERSITY OF SCIENCE & TECHNOLOGY) 18 May 2021 (2021-05-18) <br> claims, paragraph [0019] | 1-5 |
| P, X | WO 2022/102723 A1 (AMANO ENZYME INC) 19 May 2022 (2022-05-19) <br> claims | 1-5 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/017088**

| Patent document cited in search report | | | Publication date (day/month/year) | Patent family member(s) | Publication date (day/month/year) |
|---|---|---|---|---|---|
| CN | 112813126 | A | 18 May 2021 | (Family: none) | |
| WO | 2022/102723 | A1 | 19 May 2022 | (Family: none) | |

Form PCT/ISA/210 (patent family annex) (January 2015)

**REFERENCES CITED IN THE DESCRIPTION**

**Non-patent literature cited in the description**

- Standard Tables of Food Composition in Japan. Ministry of Health, Labour and Welfare. 2000